# EUROPEAN PATENT SPECIFICATION

(11) **EP 3 073 559 B1**
(45) Date of publication and mention of the grant of the patent: **03.01.2018**
(21) Application number: 14863162.5
(22) Date of filing: 10.11.2014
(51) Int. Cl.: H01M 8/04007, H01M 8/0662, H01M 8/04119, H01M 8/12, H01M 8/0612, H01M 8/04014

(54) **FUEL-CELL SYSTEM**
BRENNSTOFFZELLENSYSTEM
SYSTÈME DE PILE À COMBUSTIBLE

(30) Priority: 20.11.2013 JP 2013239486
(43) Date of publication of application: 28.09.2016
(73) Proprietor: Panasonic Intellectual Property Management Co., Ltd., Osaka-shi, Osaka 540-6207 (JP)
(72) Inventor: TAMURA, Yoshio, Osaka-shi, Osaka 540-6207 (JP); OZEKI, Masataka, Osaka-shi, Osaka 540-6207 (JP); NAKAMURA, Akiko, Osaka-shi, Osaka 540-6207 (JP)
(74) Representative: Grünecker Patent- und Rechtsanwälte PartG mbB
(86) International application number: PCT/JP2014/005628
(87) International publication number: WO 2015/075889

(56) References cited:
- WO-A1-2008/047653
- WO-A2-2009/063283
- JP-A- 2002 292 233
- JP-A- 2003 017 098
- JP-A- 2006 004 806
- JP-A- 2006 318 750
- JP-A- 2007 242 491
- JP-A- 2010 170 927
- US-A1- 2002 098 395
- US-A1- 2007 017 367
- US-A1- 2009 098 425
- US-A1- 2013 273 445

## Description

### TECHNICAL FIELD

The present invention relates to a fuel cell system in which a hydrogen-containing gas reacts with an oxidant gas such as air to generate power and heat.

### BACKGROUND ART

Typically, fuel cell systems include a reformer that generates a hydrogen-containing gas from natural gas or liquefied petroleum gas (LPG) which is a general raw material infrastructure.

In the reformer, a water vapor reforming reaction is typically used. For example, in the water vapor reforming reaction, a city gas and water vapor, which become a raw material, are allowed to react with each other at a high temperature of approximately 600°C to 700°C by using a noble metal-based reforming catalyst such as a Ni-based reforming catalyst and a Ru-based reforming catalyst. According to this, a hydrogen-containing gas that contains hydrogen as a main component is generated.

The hydrogen-containing gas which is generated is supplied to a fuel cell, and reacts with an oxidant gas such as air that is separately supplied, and power and heat are generated.

As water that is used in the water vapor reforming reaction, it is necessary to use high-purity water so as not to deteriorate a catalyst in the reformer. In a case where the water is continuously supplied from an infrastructure such as tap water, a large amount of ion exchange resin is necessary to convert the water into pure water. As a result, the cost of a fuel cell system increases.

Accordingly, there is suggested a fuel cell system in which water generated in the fuel cell system is recovered, and the water is used as water in the water vapor reforming reaction (for example, refer to PTL 1).

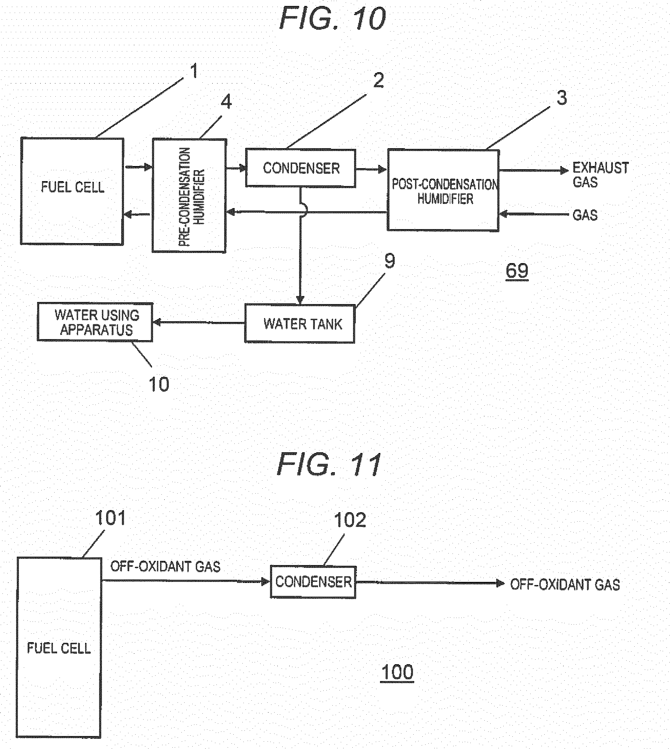

FIG. 11 is a conceptual diagram illustrating a schematic configuration of fuel cell system 100 in the related art.

In the configuration illustrated in FIG. 11, a hydrogen-containing gas that is generated by a hydrogen generation apparatus is supplied to fuel cell 101. An oxidant gas is also additionally supplied to fuel cell 101. In addition, in fuel cell 101, the hydrogen-containing gas and an oxidant gas react with each other, and thus electricity and heat are generated. An oxidant gas which is not used in the reaction is discharged from fuel cell 101 as an off-oxidant gas.

In the off-oxidant gas, water, which is generated during a reaction between hydrogen and oxygen in fuel cell 101, is contained as vapor. The off-oxidant gas is cooled down in condenser 102 to condense the water vapor. As a result, water is recovered.

In fuel cell system 100 described above, exhaust heat recovery water for recovery of heat that is generated in fuel cell 101 is typically used as a coolant in condenser 102. The exhaust heat recovery water is stored in a storage tank. Low-temperature water for exhaust heat recovery is supplied to fuel cell system 100 from a lower side of the storage tank, and high-temperature water that is recovered from fuel cell system 100 is supplied to an upper side of the storage tank. According to this, heat from fuel cell system 100 is recovered by using the low-temperature water, and the heat can be stored in the storage tank as the high-temperature water.

Here, when a temperature of the exhaust heat recovery water, which is supplied from a lower side of the storage tank, reaches a high temperature, it is difficult to sufficiently recover water in condenser 102. In fuel cell system 100, a large amount of water which includes water for humidification of the hydrogen-containing gas that is supplied to fuel cell 101, water for humidification of the oxidant gas that is supplied to fuel cell 101, and water that is used in the reforming reaction for generation of the hydrogen-containing gas, and the like, is used. When the amount of water recovered in fuel cell system 100 decreases, the amount of water recovered with respect to the amount of water used in fuel cell system 100 becomes deficient, and thus there is a problem that water balance is not established, and water independence is not realized.

In fuel cell system 100 of the related art, the off-oxidant gas that is discharged from a cathode, and an off-fuel gas that is discharged from an anode are cooled down through heat exchange with the exhaust heat recovery water and the like via a heat exchanger, and water is recovered. However, in fuel cell system 100 of the related art, even when the temperature of the exhaust heat recovery water rises, water is recovered only through cooling-down through the heat exchange. Therefore, the cooling-down performance for the off-oxidant gas and the off-fuel gas decreases, and thus water vapor in the off-oxidant gas and the off-fuel gas is not condensed in a complete manner. As a result, it is difficult to recover the amount of water necessary for driving of the fuel cell system.

PTL 2 discloses a fuel cell system, comprising a fuel cell;a first humidifier that moves water from an exhaust gas in a fuel cell unit that includes the fuel cell to a gas that is used for power generation in the fuel cell; a second humidifier that moves water from the exhaust gas that has passed through the first humidifier; a heat using unit that uses heat that is recovered from the fuel cell; and a heat carrier circulation path that circulates a heat carrier through the heat using unit,wherein the heat carrier circulation path is configured to cool down the exhaust gas that is supplied to the condenser so as to recover heat.

### Citation List

### Patent Literature

PTL 1: Japanese Patent Unexamined Publication No. 2008-234869
PTL 2: US 2002/098395 A1

### SUMMARY OF INVENTION

The invention has been made in consideration of the above-described problem, and an object thereof is to improve water independence in a fuel cell system.

According to an aspect of the invention, there is provided a fuel cell system including a fuel cell, a pro-condensation humidifier that moves water from exhaust gas in a fuel cell unit that includes the fuel cell to a gas that is used for power generation in the fuel cell, and a condenser that condenses water in the exhaust gas that has passed through the pre-condensation humidifier. The fuel cell system further includes a post-condensation humidifier that moves water from the exhaust gas that has passed through the condenser to a gas that is supplied to the pre-condensation humidifier, a heat using unit that uses heat that is recovered from the fuel cell, and a heat carrier circulation path that circulates a heat carrier through the heat using unit. The heat carrier circulation path is configured to cool down the exhaust gas that is supplied to the condenser so as to recover heat.

According to this configuration, after water in the exhaust gas in the fuel cell system is condensed by the condenser, and is separated from the exhaust gas, the exhaust gas is supplied to the post-condensation humidifier. According to this, it is possible to reliably move moisture in the exhaust gas to the gas that is used for power generation in the fuel cell. In addition, in a case where the gas, which is humidified by the post-condensation humidifier at a relatively low dew point, and is used for power generation in the fuel cell, is supplied to the fuel cell as it is, there is a concern that humidification may be insufficient. Therefore, the gas is supplied to the pre-condensation humidifier to move moisture in the exhaust gas which is exhausted from the fuel cell unit before being supplied to the condenser and contains a relatively large amount of moisture to the gas that is used for the power generation in the fuel cell. According to this, it is possible to humidify the gas that is used for the power generation in the fuel cell at a relative high dew point.

According to this configuration, even in a case where it is difficult to sufficiently condense water with a condenser, water in the exhaust gas in the fuel cell system is more reliably recovered with a simple configuration. Accordingly, it is possible to exhibit an effect in which suppression of discharge of water to an outer side of the fuel cell system, and more reliable humidification of the gas used for the power generation in the fuel cell are compatible with each other.

### BRIEF DESCRIPTION OF DRAWINGS

FIG. 1 is a conceptual diagram illustrating an example of a schematic configuration of a fuel cell system according to a first exemplary embodiment of the invention.
FIG. 2 is a diagram illustrating a peripheral configuration of a condenser of the fuel cell system according to the first exemplary embodiment of the invention.
FIG. 3 is a conceptual diagram illustrating an example of a schematic configuration of a fuel cell system according to a first modification example of the first exemplary embodiment of the invention.
FIG. 4 is a conceptual diagram illustrating an example of a schematic configuration of a fuel cell system according to a second exemplary embodiment of the invention.
FIG. 5 is a conceptual diagram illustrating an example of a schematic configuration of a fuel cell system according to a third exemplary embodiment of the invention.
FIG. 6 is a diagram illustrating another configuration of the fuel cell system according to the third exemplary embodiment of the invention.
FIG. 7 is a conceptual diagram illustrating an example of a schematic configuration of a fuel cell system according to a first modification example of the third exemplary embodiment of the invention.
FIG. 8 is a conceptual diagram illustrating an example of a schematic configuration of a fuel cell system according to a fourth exemplary embodiment of the invention.
FIG. 9 is a conceptual diagram illustrating an example of a schematic configuration of a fuel cell system according to a first modification example of the fourth exemplary embodiment of the invention.
FIG. 10 is a conceptual diagram illustrating an example of a schematic configuration of a fuel cell system according to a fifth exemplary embodiment of the invention.
FIG. 11 is a conceptual diagram illustrating a schematic configuration of a fuel cell system in the related art.

### DESCRIPTION OF EMBODIMENTS

Hereinafter, exemplary embodiments of the invention will be described. Furthermore, the invention is not limited to the contents described in the respective exemplary embodiments.

### (First Exemplary Embodiment)

First, a first exemplary embodiment of the invention will be described.

### [Apparatus Configuration]

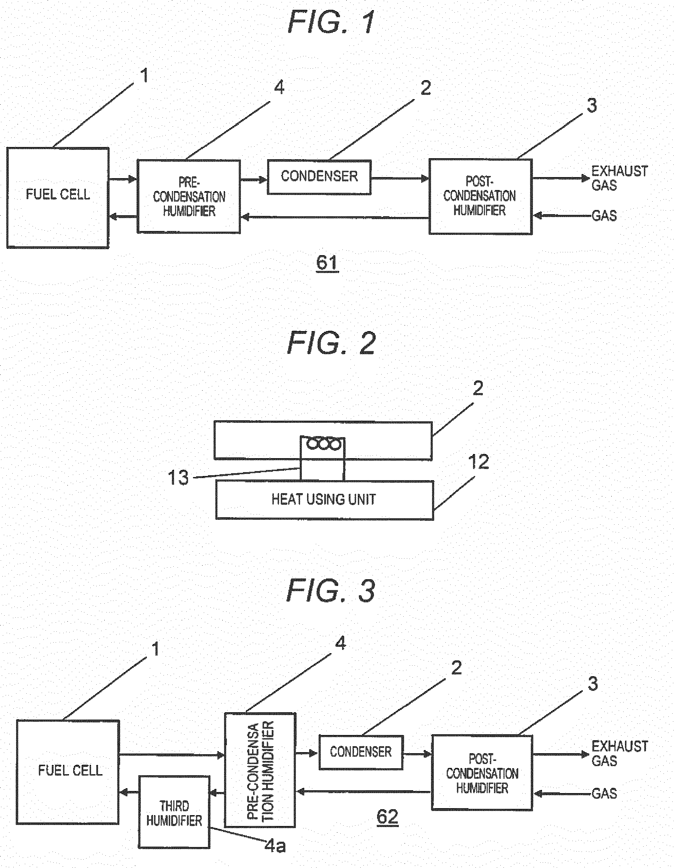

FIG. 1 is a conceptual diagram illustrating an example of a schematic configuration of fuel cell system 61 according to the first exemplary embodiment of the invention.

In the example illustrated in FIG. 1, fuel cell system 61 according to this exemplary embodiment includes fuel cell 1, condenser 2, pre-condensation humidifier 4, and post-condensation humidifier 3.

Fuel cell 1 performs power generation by using a hydrogen-containing fuel gas, and an oxygen-containing oxidant gas. Fuel cell 1 may be any type, and for example, a fuel cell, which is selected from a solid polymer type fuel cell, a solid oxide type fuel cell, and a phosphoric acid type fuel cell, may be used.

Furthermore, the fuel gas which is not used for the power generation in fuel cell 1 is discharged from fuel cell 1 as an off-fuel gas. Furthermore, the oxidant gas which is not used for the power generation in fuel cell 1 is discharged from fuel cell 1 as an off-oxidant gas. In addition, as the fuel gas that is used in fuel cell 1, a hydrogen-containing gas which is generated by reforming hydrocarbon such as a city gas and LPG with a reformer may be used, or a hydrogen-containing gas which is supplied from infrastructures, a cylinder, a tank, and the like may be used.

Pre-condensation humidifier 4 moves water from exhaust gas in the fuel cell unit that includes fuel cell 1 to a gas that is used for the power generation in the fuel cell. Pre-condensation humidifier 4 moves water vapor or water between at least the off-oxidant gas that is discharged from fuel cell 1, and the gas that is discharged from post-condensation humidifier 3 and that is used for the power generation in fuel cell 1.

Condenser 2 condenses water in the exhaust gas that has passed through pre-condensation humidifier 4. Condenser 2 cools down a water vapor-containing gas such as the off-fuel gas and the off-oxidant gas which are discharged from pre-condensation humidifier 4 to condense water. The gas that is condensed may be any gas as long as water vapor is contained. In addition, as a coolant for cooling-down in condenser 2, water, air, and the like are exemplified, but any coolant may be used as long as a gas can be cooled down. For example, it is preferable to use exhaust heat recovery water that recovers heat that is generated from fuel cell 1.

In addition, the exhaust gas that is discharged from condenser 2, and the gas that is used for the power generation in fuel cell 1 are supplied to post-condensation humidifier 3.

Post-condensation humidifier 3 moves water from the exhaust gas that has passed through condenser 2 to the gas that is supplied to pre-condensation humidifier 4. Pre-condensation humidifier 4 and post-condensation humidifier 3 are configured in such a manner that a plurality of gases pass through the inside of the respective humidifiers and water vapor or water is moved between the plurality of gases. In post-condensation humidifier 3 and pre-condensation humidifier 4, water vapor or water is moved from a gas that contains a large amount of water vapor or water to a gas that contains a small amount of water vapor or water. As pre-condensation humidifier 4 and post-condensation humidifier 3, it is possible to employ any configuration as long as the humidifier can move water vapor or water. For example, it is preferable to use a hollow fiber membrane. Furthermore, at least one of pre-condensation humidifier 4 and post-condensation humidifier 3 may be a humidifier that exchanges only water, or a total heat exchanger that can exchange not only water but also heat.

### [Operation]

Hereinafter, description will be given of an operation of fuel cell system 61 with reference to FIG. 1.

Examples of the gas that is discharged from fuel cell 1 include the off-fuel gas and the off-oxidant gas, and when any of the gases is discharged from fuel cell system 61 as the exhaust gas, water vapor is also discharged in combination with the gas. According to this, in fuel cell system 61, exhaust gas from which water is to be recovered may be at least any one of the off-fuel gas and the off-oxidant gas. In this exemplary embodiment, description will be made with reference to the off-oxidant gas.

The oxidant gas which is supplied to the cathode of fuel cell 1 may be any gas as long as an oxygen gas is contained. However, in this exemplary embodiment, description will be made with reference to an example in which air is used as the oxidant gas. A portion of oxygen in air which is supplied to the cathode of fuel cell 1 is used for power generation and heat generation in fuel cell 1. On the other hand, air components such as oxygen and nitrogen which are not used are discharged from the cathode as the off-oxidant gas. In fuel cell 1, oxygen and hydrogen react with each other, and power generation and heat generation occur. As a result, water is generated. The entirety or a portion of the water is discharged from the cathode as water vapor or a liquid. According to this, a large amount of water vapor is contained in the off-oxidant gas.

In this exemplary embodiment, so as to recover water vapor in the off-oxidant gas, at least the off-oxidant gas that is discharged from the cathode, and the oxidant gas that is supplied to the cathode are allowed to pass through pre-condensation humidifier 4 that is a cathode humidifier different from post-condensation humidifier 3, and water vapor is moved from the off-oxidant gas to the oxidant gas through pre-condensation humidifier 4.

In addition, in condenser 2, the off-oxidant gas which is discharged from pre-condensation humidifier 4 is cooled down, and water vapor is additionally condensed. As a coolant that cools down the off-oxidant gas in condenser 2, any coolant may be used as long as the off-oxidant gas can be cooled down. In this exemplary embodiment, exhaust heat recovery water, which recovers heat generated from fuel cell 1, is used. As the exhaust heat recover water, water in a storage tank, which stores heat generated in fuel cell 1, is used.

FIG. 2 is a diagram illustrating a peripheral configuration of condenser 2 of fuel cell system 61 according to the first exemplary embodiment of the invention.

As illustrated in FIG. 2, fuel cell system 61 includes heat using unit 12 and heat carrier circulation path 13. Heat using unit 12 uses heat that is recovered from fuel cell 1. In this exemplary embodiment, a storage tank is included in heat using unit 12. In addition, heat carrier circulation path 13 circulates the heat carrier through heat using unit 12. Heat carrier circulation path 13 is configured to cool down the exhaust gas that is supplied to condenser 2 so as to recover heat. Furthermore, in addition to the storage tank, heat using unit 12 may be, for example, a radiator that uses heat for heating and the like, or a heat accumulation unit that accumulates heat.

The storage tank stores water for waste heat recovery, and is configured in such a manner that high-temperature water is collected on an upper side, and low-temperature water is collected on a lower side. The exhaust heat recovery water that is extracted from the lower side of the storage tank is supplied to condenser 2 through heat carrier circulation path 13, and recovers heat from the off-oxidant gas, thereby cooling down the off-oxidant gas. The exhaust heat recovery water which has passed through condenser 2 passes through a path (heat carrier circulation path 13) for recovery of heat that is generated from fuel cell 1, and recovers heat of fuel cell 1 through heat exchange. A temperature of the exhaust heat recovery water which has recovered heat rises, and the exhaust heat recovery water is supplied to an upper side of the storage tank, and is stored as hot water. As described above, the off-oxidant gas is cooled down in condenser 2, and water vapor in the off-oxidant gas is recovered as condensed water. The water that is recovered is used to humidify a gas necessary for the power generation in fuel cell 1, or to generate a hydrogen-containing gas that is used for the power generation in fuel cell 1.

Here, the amount of water which is capable of being recovered from the off-oxidant gas in condenser 2 depends on a temperature and a flow rate of a coolant that is supplied to condenser 2. Accordingly, when the temperature of the coolant rises, or the flow rate of the coolant decreases, it is difficult to recover the amount of water necessary to continue the operation of fuel cell 1 from the off-oxidant gas.

The temperature of the exhaust heat recovery water which is supplied from the storage tank may not be lowered to a temperature sufficient as a coolant of condenser 2 for recovery of the amount of water necessary for the operation of fuel cell system 61 due to operating conditions and an installation environment of fuel cell system 61, and the like. For example, in this exemplary embodiment, in a case where water of 40°C or higher is supplied from the storage tank, it is difficult to recover the amount of water which is necessary for fuel cell 1 from condenser 2. To secure the amount of water necessary for fuel cell 1 even in this case, in this exemplary embodiment, the off-oxidant gas discharged from condenser 2 is supplied to post-condensation humidifier 3.

In addition to the off-oxidant gas, a gas which is used in fuel cell 1 is supplied to post-condensation humidifier 3. Examples of the gas that is used in fuel cell 1 include at least any one among the oxidant gas that is supplied to the cathode of fuel cell 1, the hydrogen-containing gas that is supplied to the anode of fuel cell 1, a hydrocarbon gas such as a city gas and LPG which become a raw material of the hydrogen-containing gas that is supplied to the anode of fuel cell 1, and the like.

In a case where post-condensation humidifier 3 is a typical humidifier, water vapor moves from a side in which a partial water vapor pressure is high to a side in which the partial water vapor pressure is low between the off-oxidant gas and the gas that is used in fuel cell 1. In a case where water condensation performance in condenser 2 is lowered and thus a large amount of water vapor is contained in the off-oxidant gas, the partial water vapor pressure of the off-oxidant gas becomes higher than the partial water vapor pressure of the gas that is used in fuel cell 1. In this case, water vapor that is contained in the off-oxidant gas moves to the gas that is used in fuel cell 1.

According to this, the amount of water that is discharged to an outer side of fuel cell system 61 as the off-oxidant gas decreases, and the amount of water that is used in fuel cell system 61 increases. Accordingly, the water balance in fuel cell system 61 is improved. Furthermore, at least any one of post-condensation humidifier 3 and pre-condensation humidifier 4 may be a total heat exchanger. In this case, not only movement of water vapor but also movement of heat is performed between the off-oxidant gas and the gas that is used in fuel cell 1 in at least any one of post-condensation humidifier 3 and pre-condensation humidifier 4.

The movement of water vapor and heat occurs in accordance with the dew point and the gas temperature of both of the gases. Furthermore, in a case where the temperature of the coolant that is supplied to condenser 2 is low, and the partial water vapor pressure of the off-oxidant gas which has passed through pre-condensation humidifier 4 and condenser 2 is low, water vapor may move from the gas that is used in fuel cell 1 to the off-oxidant gas in post-condensation humidifier 3, and the moved water may be discharged to an outer side of fuel cell system 61. In this case, a portion of water vapor that is originally contained in the gas that is used in fuel cell 1 is lost. However, it is possible to sufficiently recover water that is contained in the off-oxidant in pre-condensation humidifier 4 and condenser 2. Accordingly, with regard to the water balance in the entirety of fuel cell system 61, the amount of water recovered is greater than the amount of water consumed, and thus water independence is established. In addition, the exhaust gas that is condensed in condenser 2 is not limited to the off-oxidant gas, and may be the off-fuel gas or a mixed gas of the off-oxidant gas and the off-fuel gas.

In the configuration of this exemplary embodiment as described above, it is possible to perform additional exchange of water vapor between the exhaust gas that is discharged from fuel cell 1, and the gas that is used for the power generation in fuel cell 1 in comparison to a case where only post-condensation humidifier 3 is provided as the humidifier. Accordingly, it is possible to increase the amount of water vapor in the gas that is supplied to fuel cell 1.

It is difficult for fuel cell 1 to maintain durability in a completely dried state. Therefore, the oxidant gas which is supplied to the cathode is typically humidified in advance. As the humidification method, in this exemplary embodiment, the off-oxidant gas that is discharged from the cathode, and the oxidant gas that is supplied to the cathode are allowed to pass through pre-condensation humidifier 4 that is a cathode humidifier different from post-condensation humidifier 3, and water vapor is additionally moved from the off-oxidant gas to the oxidant gas through pre-condensation humidifier 4.

In this exemplary embodiment, the off-oxidant gas which is discharged from the cathode of fuel cell 1 is supplied to condenser 2 after water vapor is moved at once through pre-condensation humidifier 4 without being directly supplied to condenser 2. Furthermore, the exhaust gas which passes through pre-condensation humidifier 4 is not limited to the off-oxidant gas, and may be the off-fuel gas or a mixed gas of the off-fuel gas and the off-oxidant gas.

In addition, the gas which passes through pre-condensation humidifier 4 and is used for the power generation in fuel cell 1 is not limited to the oxidant gas, and may be the hydrogen-containing gas that is supplied to the anode of fuel cell 1, or a hydrocarbon gas such as a city gas and LPG which become a raw material of the hydrogen-containing gas that is supplied to the anode of fuel cell 1.

### [First Modification Example]

FIG. 3 is a conceptual diagram illustrating an example of a schematic configuration of fuel cell system 62 according to a first modification example of the first exemplary embodiment of the invention.

As illustrated in FIG. 3, this modification example is different from fuel cell system 61 according to the first exemplary embodiment in that the gas which has passed through pre-condensation humidifier 4 and is used for the power generation in fuel cell 1 is supplied to third humidifier 4a.

Fuel cell system 62 of this modification example can be configured in the same manner as fuel cell system 61 according to the first exemplary embodiment except for the above-described configuration.

In this configuration, it is possible to humidify the gas which is used for the power generation in fuel cell 1 by third humidifier 4a, and thus it is possible to further increase the amount of water vapor in the gas that is supplied to fuel cell 1 in comparison to fuel cell system 61 according to the first exemplary embodiment.

Examples of the gas that is used for the power generation in fuel cell 1 include at least any one among the oxidant gas, the hydrogen-containing gas that is supplied to the anode of fuel cell 1, a hydrocarbon gas such as a city gas and LPG which become a raw material of the hydrogen-containing gas that is supplied to the anode of fuel cell 1, and the like.

In third humidifier 4a, as a humidification source that humidifies the gas that is used for the power generation in fuel cell 1, any humidification source may be used. For example, water which flows for cooling-down of fuel cell 1 and the like may be used.

Description will be given of an effect of fuel cell systems 61 and 62 described above in this exemplary embodiment.

Even in a fuel cell system of the related art, in a case where the temperature of the coolant which cools down the gas supplied to the condenser is sufficiently low and it is possible to sufficiently cool down the exhaust gas that is supplied to the condenser, it is possible to separate a relatively large amount of moisture that is condensed with the condenser. Accordingly, water in the exhaust gas in the fuel cell system is more reliably recovered, and thus it is possible to prevent water from being discharged to an outer side of the fuel cell system. However, the dew point of the exhaust gas which passes through the post-condensation humidifier is lowered, and thus there is a concern that it may be difficult to sufficiently humidify the gas that is used for the power generation in the fuel cell. Accordingly, in this exemplary embodiment, the gas is supplied to pre-condensation humidifier 4 to move moisture in the exhaust gas which is exhausted from the fuel cell unit before being supplied to condenser 2 and which contains a relatively large amount of moisture to the gas that is used for the power generation in fuel cell 1, and thus it is possible to sufficiently humidify the gas that is used for the power generation of fuel cell 1.

On the other hand, in the fuel cell system of the related art, in a case where the temperature of the coolant which cools down the gas supplied to the condenser is high and it is difficult to sufficiently cool down the exhaust gas that is supplied to the condenser, it is difficult to sufficiently condense water with the condenser. Accordingly, there is a concern that moisture in the exhaust gas in the fuel cell system may be discharged to an outer side of the fuel cell system. Therefore, in this exemplary embodiment, moisture in the exhaust gas in fuel cell systems 61 and 62 is moved to the gas that is used for the power generation in fuel cell 1 by using post-condensation humidifier 3 so as to more reliably recover water in the exhaust gas. According to this, water is prevented from being discharged to an outer side of fuel cell systems 61 and 62.

In addition, the gas which is used for the power generation in fuel cell 1 is humidified at a relatively low dew point, and it is possible to reliably humidify the gas which is used for the power generation in fuel cell 1 by using pre-condensation humidifier 4 so that the dew point of the gas is further raised.

Here, in a case where it is difficult to sufficiently cool down the exhaust gas that is supplied to condenser 2, the dew point of the exhaust gas which passes through post-condensation humidifier 3 is relatively raised, and the dew point of the gas which passes through post-condensation humidifier 3 and is used for the power generation in fuel cell 1 is also relatively raised. In addition, the dew point of the gas which is supplied to pre-condensation humidifier 4 and is used for the power generation in fuel cell 1 is further raised in comparison to a case where it is possible to sufficiently cool down the exhaust gas that is supplied to condenser 2.

According to this, in pre-condensation humidifier 4, moisture which moves from the exhaust gas in fuel cell systems 61 and 62 to the gas that is used for the power generation in fuel cell 1 further decreases in comparison to a case where it is possible to sufficiently cool down the exhaust gas that is supplied to condenser 2. Accordingly, the dew point of the exhaust gas that is supplied from pre-condensation humidifier 4 to condenser 2, is further raised in comparison to a case where it is possible to sufficiently cool down the exhaust gas that is supplied to condenser 2. Accordingly, according to the configuration of this exemplary embodiment, even in a case where it is difficult to sufficiently cool down the exhaust gas that is supplied to condenser 2, it is possible to further increase the amount of moisture that can be separated with condenser 2. As a result, it is possible to suppress deficiency of water that is used for the reforming reaction in fuel cell systems 61 and 62.

### (Second Exemplary Embodiment)

Next, a second exemplary embodiment of the invention will be described.

### [Apparatus Configuration]

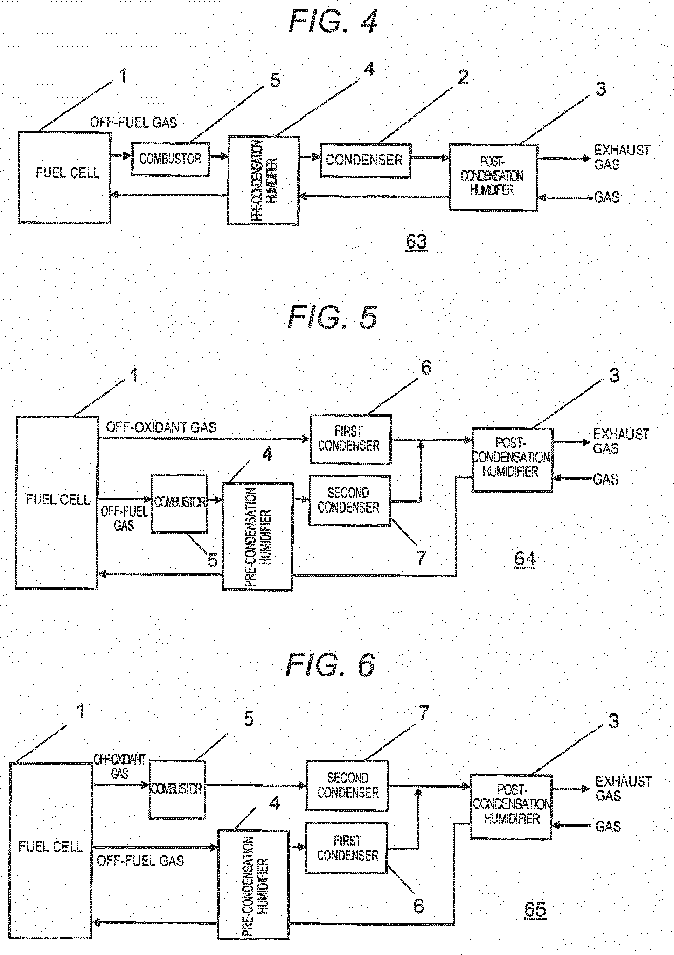

FIG. 4 is a conceptual diagram illustrating an example of a schematic configuration of fuel cell system 63 according to the second exemplary embodiment of the invention.

In the example illustrated in FIG. 4, fuel cell system 63 according to this exemplary embodiment includes fuel cell 1, condenser 2, post-condensation humidifier 3, pre-condensation humidifier 4, and combustor 5.

Configurations of fuel cell 1, condenser 2, pre-condensation humidifier 4, and post-condensation humidifier 3 are the same as in fuel cell systems 61 and 62 according to the first exemplary embodiment, and thus description thereof will not be repeated.

Combustor 5 combusts the off-fuel gas that is discharged from the anode of fuel cell 1. Combustor 5 may have any configuration as long as the off-fuel gas can be combusted in the configuration. In this exemplary embodiment, a combustion burner for heating in a reformer that generates a fuel gas which is supplied to the anode of fuel cell 1 and contains hydrogen is used.

For example, in the reformer, in a case where a fuel gas is generated through a water vapor reforming reaction, the reaction is an endothermic reaction, and thus it is necessary to apply a necessary amount of heat from the combustion burner. As a supply source of the heat, combustor 5 is used. It is necessary to separately supply a gas that contains oxygen necessary for a combustion reaction to combustor 5. In this exemplary embodiment, air is supplied by using a fan.

In addition, combustor 5 is not limited to the combustion burner that heats the reformer. For example, it is possible to employ a configuration of combusting the off-fuel gas of fuel cell 1 that performs power generation by using pure hydrogen as a fuel gas, and of heating the exhaust heat recovery water by using the resultant combustion heat for recovery as a thermal energy.

### [Operation]

Hereinafter, description will be given of an operation of fuel cell system 63.

Fuel cell system 63 according to this exemplary embodiment burns the off-fuel gas which is discharged from the anode of fuel cell 1 with combustor 5, and supplies a combustion exhaust gas which is discharged from combustor 5 to pre-condensation humidifier 4 and post-condensation humidifier 3 to recover water vapor in the combustion exhaust gas. The operation of fuel cell system 63 according to this exemplary embodiment is basically the same as in fuel cell systems 61 and 62 of the first exemplary embodiment except for the above-described configuration, and thus characteristics thereof will be described with reference to FIG. 4.

A hydrogen-containing fuel gas is supplied to the anode of fuel cell 1. In the fuel gas, a gas that is not used for a reaction in fuel cell 1 is discharged from the anode of fuel cell 1 as an off-fuel gas. It is difficult for fuel cell 1 to maintain durability in a completely dried state. Therefore, typically, the fuel gas that is supplied to the anode contains water.

After humidifying the anode of fuel cell 1, the water is discharged in combination with the off-fuel gas. In addition, along with the power generation in fuel cell 1, water that is generated in the cathode moves to the anode, and the water may be contained in the off-fuel gas. In this manner, water vapor is contained in the off-fuel gas. In addition, in this exemplary embodiment, the off-fuel gas that contains water vapor is supplied to combustor 5. However, water in the off-fuel gas may be condensed at once and recovered, and then the off-fuel gas may be combusted with combustor 5.

The off-fuel gas is supplied to combustor 5, and a combustible gas such as hydrogen and hydrocarbon in the off-fuel gas is burned. When hydrogen or hydrocarbon is combusted, water is generated. According to this, a large amount of water is contained in the off-fuel gas that is discharged from combustor 5. The off-fuel gas is supplied to pre-condensation humidifier 4 and condenser 2 so as to recover the water. A humidification method in pre-condensation humidifier 4, and a water condensation method in condenser 2 are the same as in the first exemplary embodiment, and the description thereof will not be repeated.

Water vapor in the off-fuel gas humidifies the fuel gas in pre-condensation humidifier 4, and is condensed in condenser 2 and is recovered. However, when water condensation performance in condenser 2 is lowered, in fuel cell system 63, a ratio of the amount of water recovered to the amount of water used decreases, and thus water independence in fuel cell system 63 is not established. Accordingly, the off-fuel gas is additionally supplied to post-condensation humidifier 3 so as to increase the amount of water recovered. A water recovery method with post-condensation humidifier 3 is the same as in the first exemplary embodiment, and thus description thereof will not be repeated.

Fuel cell system 63 according to this exemplary embodiment may be configured in the same manner as fuel cell systems 61 and 62 of the first exemplary embodiment except for the above-described characteristics.

### (Third Exemplary Embodiment)

Next, a third exemplary embodiment of the invention will be described.

### [Apparatus Configuration]

FIG. 5 is a conceptual diagram illustrating an example of a schematic configuration of fuel cell system 64 according to the third exemplary embodiment of the invention.

In the example illustrated in FIG. 5, fuel cell system 64 according to this exemplary embodiment includes fuel cell 1, pre-condensation humidifier 4, post-condensation humidifier 3, combustor 5, first condenser 6, and second condenser 7.

Configurations of fuel cell 1, pre-condensation humidifier 4, post-condensation humidifier 3, and combustor 5 are the same as in the first exemplary embodiment and the second exemplary embodiment, and thus description thereof will not be repeated.

First condenser 6 is a condenser that condenses water vapor in the off-oxidant gas that is discharged from fuel cell 1 to recover the water vapor. A condensation method or a coolant is the same as in condenser 2 according to the first exemplary embodiment, and thus description thereof will not be repeated.

Second condenser 7 is a condenser that condenses water vapor in the combustion exhaust gas that is discharged from combustor 5 and pre-condensation humidifier 4 to recover the water vapor. A condensation method or a coolant is the same as in condenser 2 according to the first exemplary embodiment and the second exemplary embodiment, and thus description thereof will not be repeated. In addition, with regard to a coolant that is supplied to first condenser 6 and second condenser 7, the same coolant may be supplied after being divided in parallel. In addition, first condenser 6 and second condenser 7 may be connected in series, and the same coolant may be allowed to sequentially flow for cooling-down. Furthermore, in a case of being connected in series, a connection order of first condenser 6 and second condenser 7 may be selected in an arbitrary manner. In addition, it is possible to employ a configuration in which coolants different from each other are supplied to first condenser 6 and second condenser 7, respectively. In this exemplary embodiment, exhaust heat recovery water is supplied to first condenser 6 and second condenser 7 after being divided in parallel.

### [Operation]

Hereinafter, description will be given of an operation of fuel cell system 64.

The operation of fuel cell system 64 according to this exemplary embodiment is the same as in at least any one of fuel cell systems 61 to 63 according to the first exemplary embodiment and the second exemplary embodiment, and thus characteristics thereof will be described with reference to FIG. 5.

The off-oxidant gas is discharged from the cathode of fuel cell 1, and the off-fuel gas is discharged from the anode of fuel cell 1. The off-fuel gas is combusted in combustor 5, and becomes an off-fuel gas that further contains water vapor.

The off-oxidant gas is allowed to flow through first condenser 6 to condense water vapor in the off-oxidant gas and to recover water. In addition, the off-fuel gas is allowed to flow through pre-condensation humidifier 4 and second condenser 7 to condense water vapor in the off-fuel gas and to recover water. In this manner, water is recovered from the off-oxidant gas and the off-fuel gas. However, in a case where cooling-down performance of at least any one of first condenser 6 and second condenser 7 is lowered, the amount of water recovered in fuel cell system 64 decreases, and the water balance collapses, and thus it is difficult to realize water independence. Accordingly, the off-oxidant gas that has passed through first condenser 6, and the off-fuel gas that has passed through second condenser 7 are allowed to flow to post-condensation humidifier 3 to supply water vapor to a gas that is used in fuel cell 1.

Here, two post-condensation humidifiers 3 may be prepared to move water vapor to the gas that is used in fuel cell 1 individually from the off-oxidant gas and the off-fuel gas. In this exemplary embodiment, for simplification of the configuration of fuel cell system 64, the off-oxidant gas and the off-fuel gas are mixed, and then the resultant mixed gas is supplied to post-condensation humidifier 3.

In this manner, water vapor is moved to the gas that is used in fuel cell 1 from both the off-oxidant gas and the off-fuel gas, and thus it is possible to increase the amount of water that is recovered by the gas that is used in fuel cell 1.

FIG. 6 is a diagram illustrating another configuration of fuel cell system 65 according to the third exemplary embodiment of the invention.

In fuel cell system 65 illustrated in FIG. 6, pre-condensation humidifier 4 is disposed between the off-oxidant gas that is discharged from fuel cell 1, and the gas that is humidified in post-condensation humidifier 3 and is used in fuel cell 1.

According to this configuration, it is also possible to humidify the oxidant gas by further increasing the amount of water that is recovered from the off-oxidant gas in comparison to fuel cell system 64.

### [First Modification Example]

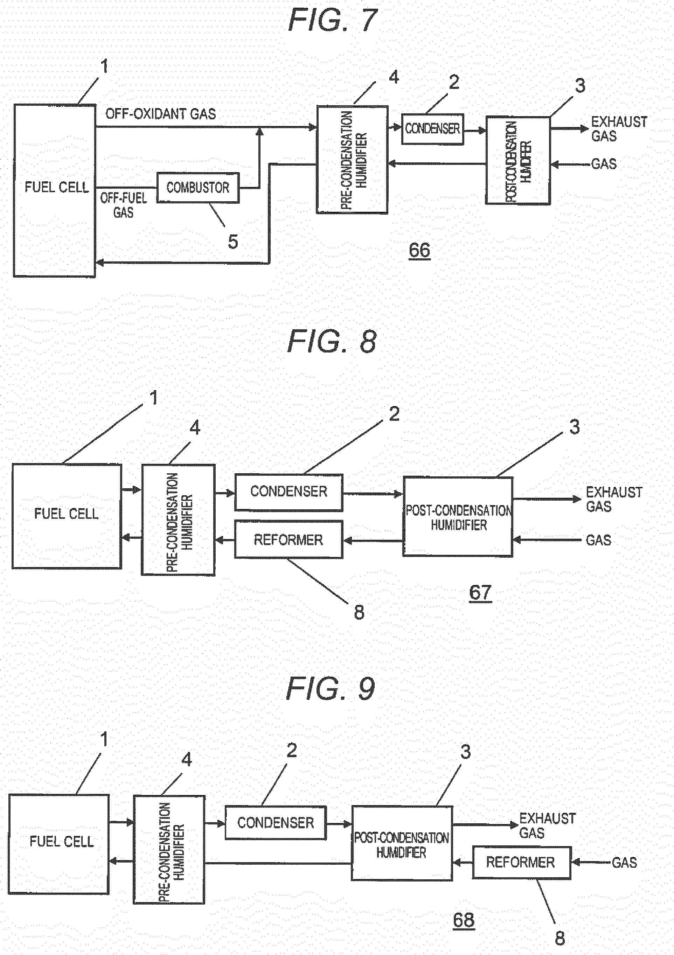

FIG. 7 is a conceptual diagram illustrating an example of a schematic configuration of fuel cell system 66 according to a first modification example of the third exemplary embodiment of the invention.

As illustrated in FIG. 7, in this modification example, the off-oxidant gas that is discharged from the cathode of fuel cell 1, and the off-fuel gas that is discharged from combustor 5 are mixed, and the resultant mixed gas is supplied to pre-condensation humidifier 4 and condenser 2.

In fuel cell system 66 of this modification example, it is possible to employ the same configuration as in at least any one of fuel cell systems 61 to 65 according to the first exemplary embodiment, the second exemplary embodiment, and the third exemplary embodiment except for the above-described configuration.

According to this configuration, water vapor in the off-oxidant gas and the off-fuel gas can be condensed with one condenser 2, and thus it is possible to simplify a system configuration. In addition, in this exemplary embodiment, after the off-fuel gas is combusted with combustor 5, the resultant gas is mixed with the off-oxidant gas. However, after the off-oxidant gas and the off-fuel gas are mixed and the resultant mixed gas is combusted with combustor 5, the resultant gas may be supplied to condenser 2. For example, in a case of using a solid oxide type fuel cell as fuel cell 1, it is preferable to combust the off-oxidant gas and the off-fuel gas.

Fuel cell systems 64, 65, and 66 according to this exemplary embodiment may be configured in the same manner as in fuel cell systems 61 and 62 according to the first exemplary embodiment except for the above-described characteristics.

### (Fourth Exemplary Embodiment)

Next, a fourth exemplary embodiment of the invention will be described.

### [Apparatus Configuration]

FIG. 8 is a conceptual diagram illustrating an example of a schematic configuration of fuel cell system 67 according to the fourth exemplary embodiment of the invention.

In the example illustrated in FIG. 8, fuel cell system 67 according to this exemplary embodiment includes fuel cell 1, condenser 2, pre-condensation humidifier 4, post-condensation humidifier 3, and reformer 8.

Configurations of fuel cell 1, condenser 2, pre-condensation humidifier 4, and post-condensation humidifier 3 are the same as in at least any one of the first exemplary embodiment, the second exemplary embodiment, and the third exemplary embodiment, and thus description thereof will not be repeated.

Reformer 8 generates a hydrogen-containing gas by using a raw material. Specifically, in a reforming section inside reformer 8, the raw material is subjected to a reforming reaction to generate the hydrogen-containing gas. The reforming reaction may be an arbitrary type. For example, a water vapor reforming reaction, an auto thermal reaction, a partial oxidation reaction, and the like may be used. Although not illustrated in FIG. 8, devices necessary for each reforming reaction are appropriately provided.

For example, in a case where the reforming reaction is the water vapor reforming reaction, combustor 5 that heats the reformer, an evaporator that generates water vapor, and a water supplier that supplies water to the evaporator are provided. In a case where the reforming reaction is the auto thermal reaction, an air supplier that supplies air to reformer 8 is additionally provided. In addition, the raw material is a gas such as a city gas and a natural gas which contains methane as a main component, and LPG, and the gas contains an organic compound composed of at least carbon and hydrogen.

### [Operation]

Hereinafter, an operation of fuel cell system 67 will be described.

The operation of fuel cell system 67 according to this exemplary embodiment is the same as in at least any one of fuel cell systems 61 to 66 according to the first exemplary embodiment, the second exemplary embodiment, and the third exemplary embodiment, and characteristics thereof will be described with reference to FIG. 8.

In reformer 8, a fuel gas that is supplied to the anode of fuel cell 1 and is a hydrogen-containing gas is generated. In addition to a raw material, water is necessary to generate the fuel gas. The raw material is allowed to flow through pre-condensation humidifier 4 and post-condensation humidifier 3 to recover a portion of the water. In a configuration in which a humidification amount of the raw material is not sufficient with respect to an amount for a reforming reaction in reformer 8, separate reforming water may be additionally supplied to reformer 8. This exemplary embodiment employs a configuration in which the reforming water is added to reformer 8.

### [First Modification Example]

FIG. 9 is a conceptual diagram illustrating an example of a schematic configuration of fuel cell system 68 in a first modification example of the fourth exemplary embodiment of the invention.

As illustrated in FIG. 9, in this modification example, a fuel gas that is a hydrogen-containing gas is generated from a raw material in reformer 8, and the fuel gas is allowed to flow through post-condensation humidifier 3 and pre-condensation humidifier 4. According to this, water vapor moves from pre-condensation humidifier 4 and post-condensation humidifier 3 to humidify the fuel gas. The fuel gas which is humidified by post-condensation humidifier 3 and pre-condensation humidifier 4 is supplied to fuel cell 1, and is used for the power generation in fuel cell 1.

Fuel cell system 68 of this modification example may be configured in the same manner as in at least any one of fuel cell systems 61 to 67 according to the first exemplary embodiment, the second exemplary embodiment, the third exemplary embodiment, and the fourth exemplary embodiment except for the above-described configurations.

According to this configuration, it is possible to supply the fuel gas that is humidified to fuel cell 1, and it is possible to reduce water vapor that is discharged from fuel cell system 68 via the exhaust gas. Accordingly, the water balance in fuel cell system 68 is improved, and thus it is possible to enhance the water independence.

Fuel cell systems 67 and 68 according to this exemplary embodiment may be configured in the same manner as fuel cell systems 61 to 66 according to the first exemplary embodiment, the second exemplary embodiment, and the third exemplary embodiment except for the above-described characteristics.

### (Fifth Exemplary Embodiment)

Next, a fifth exemplary embodiment of the invention will be described.

### [Apparatus Configuration]

FIG. 10 is a conceptual diagram illustrating an example of a schematic configuration of fuel cell system 69 according to the fifth exemplary embodiment of the invention.

In the example illustrated in FIG. 10, fuel cell system 69 according to this exemplary embodiment includes fuel cell 1, condenser 2, pre-condensation humidifier 4, post-condensation humidifier 3, water tank 9, and water using apparatus 10.

Configurations of fuel cell 1, condenser 2, pre-condensation humidifier 4, and post-condensation humidifier 3 are the same as in at least any one of the first exemplary embodiment, the second exemplary embodiment, the third exemplary embodiment, and the fourth exemplary embodiment, and thus description thereof will not be repeated.

Water tank 9 is a tank that recovers and collects water condensed in condenser 2. Water tank 9 may employ any configuration as long as water that is condensed can be collected.

Water using apparatus 10 is an apparatus that uses water that is collected in water tank 9. Examples of water using apparatus 10 include reformer 8 that uses water in a reforming reaction, a vapor generator that supplies water vapor to reformer 8, a humidifier that is used for humidification of a gas that is supplied to the anode or the cathode of fuel cell 1, a cooler that cools down fuel cell 1, a cooling water tank that stores cooling water, and the like. Water using apparatus 10 may be any apparatus that uses water in fuel cell system 69.

### [Operation]

Hereinafter, an operation of fuel cell system 69 will be described.

The operation of fuel cell system 69 according to this exemplary embodiment is the same as in at least any one of fuel cell systems 61 to 68 of the first exemplary embodiment, the second exemplary embodiment, the third exemplary embodiment, and the fourth exemplary embodiment, and characteristics thereof will be described with reference to FIG. 10.

Water which is condensed in condenser 2 is collected in water tank 9. The water which is collected in water tank 9 is used in water using apparatus 10. As described above, if the water is collected at once in water tank 9, even when water condensation performance in condenser 2 varies, it is possible to stably supply water to water using apparatus 10.

Water that has been used in water using apparatus 10 is condensed again in condenser 2, is collected in water tank 9, and is reused in fuel cell system 69. According to this, it is possible to circulate water at the inside of fuel cell system 69, and it is not necessary to additionally supply water from an outer side of fuel cell system 69.

In a case where water is supplied from an outer side of fuel cell system 69, tap water is used as the water. When converting the water into pure water and using the pure water in fuel cell system 69, a pure water device including a large amount of ion exchange resin is necessary. In this case, the cost increases, and the size of fuel cell system 69 increases. Therefore, water is recovered inside fuel cell system 69.

Fuel cell system 69 according to this exemplary embodiment may be configured in the same manner as in fuel cell systems 61 to 68 according to the first exemplary embodiment, the second exemplary embodiment, the third exemplary embodiment, and the fourth exemplary embodiment except for the above-described characteristics.

In this exemplary embodiment, in a case where the water condensation performance in condenser 2 is lowered, in post-condensation humidifier 3 and pre-condensation humidifier 4, water is returned to the inside of fuel cell system 69 by using the gas that is used in fuel cell 1. According to this, water discharge to an outer side of fuel cell system 69 is suppressed, and thus it is possible to establish water independence in fuel cell system 69.

As described above, each of fuel cell systems 61 to 69 according to the exemplary embodiments includes fuel cell 1, pre-condensation humidifier 4 that moves water from the exhaust gas in the fuel cell unit including fuel cell 1 to the gas that is used for the power generation in fuel cell 1, and condenser 2 that condenses water in the exhaust gas that has passed through pre-condensation humidifier 4. In addition, the fuel cell system includes post-condensation humidifier 3 that moves water from the exhaust gas which has passed through condenser 2 to the gas that is supplied to pre-condensation humidifier 4, heat using unit 12 that uses heat that is recovered from fuel cell 1, and heat carrier circulation path 13 that circulates a heat carrier through heat using unit 12. In addition, heat carrier circulation path 13 is configured to cool down the exhaust gas that is supplied to condenser 2 to recover heat.

According to this configuration, water vapor which is not capable of being condensed with condenser 2 is moved to the gas that is used for the power generation in fuel cell 1 by post-condensation humidifier 3, and thus the amount of water recovered further increases in comparison to a case where water is recovered by condensing water vapor in the exhaust gas with only condenser 2. Accordingly, it is possible to improve water independence.

According to this configuration, it is possible to recover water in fuel cell systems 61 to 69 before water vapor is discharged as a combustion exhaust gas from fuel cell systems 61 to 69, and thus it is possible to increase the amount of water recovered in fuel cell systems 61 to 69.

Even in a fuel cell system of the related art, in a case where the temperature of the coolant that cools down the gas supplied to the condenser is sufficiently low and it is possible to sufficiently cool down the exhaust gas that is supplied to the condenser, it is possible to separate a relatively large amount of moisture that is condensed with the condenser. Accordingly, water in the exhaust gas in the fuel cell system is more reliably recovered, and thus it is possible to prevent water from being discharged to an outer side of the fuel cell system. However, the dew point of the exhaust gas which passes through the post-condensation humidifier is lowered, and thus there is a concern that it may be difficult to sufficiently humidify the gas that is used for the power generation in the fuel cell. Accordingly, in the respective exemplary embodiment, the gas is supplied to pre-condensation humidifier 4 to move moisture in the exhaust gas which is exhausted from fuel cell units 61 to 69 before being supplied to condenser 2 and which contains a relatively large amount of moisture to the gas that is used for the power generation in fuel cell 1, and thus it is possible to sufficiently humidify the gas that is used for the power generation of fuel cell 1.

On the other hand, in the fuel cell system of the related art, in a case where the temperature of the coolant which cools down the gas supplied to the condenser is high and it is difficult to sufficiently cool down the exhaust gas that is supplied to the condenser, it is difficult to sufficiently condense water with the condenser. Accordingly, there is a concern that moisture in the exhaust gas in the fuel cell system may be discharged to an outer side of the fuel cell system. Therefore, in the respective exemplary embodiments, moisture in the exhaust gas in fuel cell systems 61 to 69 is moved to the gas that is used for the power generation in fuel cell 1 by using post-condensation humidifier 3 so as to more reliably recover water in the exhaust gas. According to this, water is prevented from being discharged to an outer side of fuel cell systems 61 to 69.

In addition, the gas which is used for the power generation in fuel cell 1 is humidified at a relatively low dew point, and it is possible to reliably humidify the gas which is used for the power generation in fuel cell 1 by using pre-condensation humidifier 4 so that the dew point of the gas is further raised.

Here, in a case where it is difficult to sufficiently cool down the exhaust gas that is supplied to condenser 2, the dew point of the exhaust gas which passes through post-condensation humidifier 3 is relatively raised, and the dew point of the gas which passes through post-condensation humidifier 3 and is used for the power generation in fuel cell 1 is also relatively raised. In addition, the dew point of the gas which is supplied to pre-condensation humidifier 4 and is used for the power generation in fuel cell 1 is further raised in comparison to a case where it is possible to sufficiently cool down the exhaust gas that is supplied to condenser 2.

According to this, in pre-condensation humidifier 4, moisture which moves from the exhaust gas in fuel cell systems 61 to 69 to the gas that is used for the power generation in fuel cell 1, further decreases in comparison to a case where it is possible to sufficiently cool down the exhaust gas that is supplied to condenser 2. Accordingly, the dew point of the exhaust gas that is supplied from pre-condensation humidifier 4 to condenser 2, is further raised in comparison to a case where it is possible to sufficiently cool down the exhaust gas that is supplied to condenser 2. Accordingly, according to the configuration of this exemplary embodiment, even in a case where it is difficult to sufficiently cool down the exhaust gas that is supplied to condenser 2, it is possible to further increase the amount of moisture that can be separated with condenser 2. As a result, it is possible to suppress deficiency of water that is used for the reforming reaction in fuel cell systems 61 to 69.

In addition, fuel cell systems 61 to 69 may be configured to additionally include water tank 9 that collects water condensed with condenser 2, and reformer 8 that reforms a raw material and water in the water tank, and supplies a hydrogen-containing gas that is generated to the anode of fuel cell 1.

In addition, description has been given on the assumption that a configuration including water tank 9 is set as fuel cell system 69, and a configuration including reformer 8 is set as fuel cell systems 67 and 68. However, there is no limitation to the example, and fuel cell systems 61 to 69 may be configured to include water tank 9 and reformer 8, respectively.

According to this configuration, water is stored at once in water tank 9. Accordingly, even when water condensation performance in condenser 2 varies, it is possible to stably supply water to the water using apparatus. According to this configuration, water which is condensed with condenser 2 inside the fuel cell system is stored and used. In addition, it is possible to recover water vapor with a raw material that is used in reformer 8 that generates the hydrogen-containing gas via post-condensation humidifier 3.

In addition, the hydrogen-containing gas which is generated through reforming of water in water tank 9 with reformer 8 is supplied to the anode of fuel cell 1, and thus it is possible to additionally improve water independence.

In addition, at least one of pre-condensation humidifier 4 and post-condensation humidifier 3 may be configured as a total heat exchanger that performs the total heat exchange between the exhaust gas, and the gas that is used for the power generation in fuel cell 1.

According to this configuration, water vapor which is not capable of being condensed with condenser 2 is moved to the gas that is used for the power generation in fuel cell 1 by at least one of pre-condensation humidifier 4 and post-condensation humidifier 3, and thus the amount of water recovered further increases in comparison to a case where water is recovered by condensing water vapor in the exhaust gas with only condenser 2. Accordingly, it is possible to improve water independence.

In addition, it is also possible to employ a configuration in which the exhaust gas is the off-oxidant gas discharged from the cathode of fuel cell 1.

According to this configuration, it is possible to recover water at the inside of the fuel cell system before the off-oxidant gas is discharged from the fuel cell system, and thus it is possible to increase the amount of water recovered in the fuel cell system.

In addition, it is possible to employ a configuration in which fuel cell systems 61 to 69 further include combustor 5 that combusts the off-fuel gas discharged from the anode of fuel cell 1, and condenser 2 condenses water in the combustion exhaust gas discharged from combustor 5.

According to this configuration, it is possible to recover water at the inside of the fuel cell system before water vapor is discharged from the fuel cell system as the combustion exhaust gas, and thus it is possible to increase the amount of water recovered in the fuel cell system.

In addition, it is possible to employ a configuration in which fuel cell systems 61 to 69 further include combustor 5 that combusts the off-fuel gas discharged from the anode of fuel cell 1, and condenser 2 condenses water in a mixed gas of the off-oxidant gas discharged from the cathode of fuel cell 1 and the combustion exhaust gas discharged from combustor 5.

According to this configuration, it is possible to recover water at the inside of the fuel cell system from both the off-fuel gas and the off-oxidant gas which are discharged from fuel cell 1, and thus it is possible to increase the amount of water recovered in the fuel cell system.

In addition, fuel cell systems 61 to 69 may further include combustor 5 that combusts the off-fuel gas that is discharged from the anode of fuel cell 1, and condenser 2 may include first condenser 6 that condenses water in the off-oxidant gas that is discharged from the cathode of fuel cell 1, and second condenser 7 that condenses water in the combustion exhaust gas that is discharged from combustor 5. In addition, post-condensation humidifier 3 may be configured to perform the total heat exchange between a mixed gas of the off-oxidant gas that has passed through first condenser 6 and the combustion exhaust gas that has passed through second condenser 7, and the gas that is used in fuel cell 1.

According to this configuration, water vapor is moved from both the off-oxidant gas and the off-fuel gas to the gas that is used in fuel cell 1 while reducing a load on post-condensation humidifier 3, and thus it is possible to increase the amount of water that is recovered by the gas that is used in fuel cell 1.

In addition, combustor 5 may be configured to combust at least one of the raw material, the hydrogen-containing gas, and the off-fuel gas.

According to this configuration, as combustor 5, it is possible to use a combustion burner for heating in reformer 8 that generates a hydrogen-containing fuel gas that is supplied to the anode of fuel cell 1.

In addition, the gas that is used for power generation in fuel cell 1 may be the oxidant gas that is supplied to the cathode of fuel cell 1.

According to this configuration, in comparison to a case where water is recovered by condensing water vapor in the off-oxidant gas with only condenser 2, it is possible to recover water that remains in the off-oxidant gas after condenser 2, and thus it is possible to increase the amount of water that is recovered.

In addition, the gas that is used for the power generation in fuel cell 1 may be the hydrogen-containing gas that is supplied to the anode of fuel cell 1.

It should be understood by those skilled in the art that numerous modifications or other embodiments of the invention can be made from the above description. Accordingly, the description should be analyzed as an example, and is provided to teach the preferred aspect for execution of the invention to those skilled in the art. Details of at least any one of structures and functions of the invention may be substantially changed without departing from the scope of the claims. For example, it is needless to say that a combination of configurations of respective embodiments is included in the scope of the invention.

### INDUSTRIAL APPLICABILITY

As described above, according to the invention, even in a case where it is difficult to sufficiently condense water with a condenser, water in the exhaust gas in the fuel cell system is more reliably recovered with a simple configuration. Accordingly, it is possible to exhibit an effect in which suppression of discharge of water to an outer side of the fuel cell system, and more reliable humidification of the gas used for the power generation in the fuel cell are compatible with each other. Accordingly, the invention is useful as a fuel cell system in which hydrogen-containing gas is allowed to react with an oxidant gas such as air to generate electric power and heat, and the like.

### REFERENCE MARKS IN THE DRAWINGS

1 Fuel cell
2 Condenser
3 Post-condensation humidifier
4 Pre-condensation humidifier
4a Third humidifier
5 Combustor
6 First condenser
7 Second condenser
8 Reformer
9 Water tank
10 Water using apparatus
12 Heat using unit
13 Heat carrier circulation path
61 to 69 Fuel cell system

## Claims

1. A fuel cell system, comprising: a fuel cell; a pre-condensation humidifier that moves water from an exhaust gas in a fuel cell unit that includes the fuel cell to a gas that is used for power generation in the fuel cell; a condenser; a heat using unit that uses heat that is recovered from the fuel cell; and a heat carrier circulation path that circulates a heat carrier through the heat using unit, wherein the heat carrier circulation path is configured to cool down the exhaust gas that is supplied to the condenser so as to recover heat; **characterized in that** the condenser condenses water in the exhaust gas that has passed through the pre-condensation humidifier; a post-condensation humidifier that moves water from the exhaust gas that has passed through the condenser to a gas that is supplied to the pre-condensation humidifier.

2. The fuel cell system of claim 1, further comprising:
a water tank that collects water that is condensed by the condenser; and
a reformer that reforms a raw material and water in the water tank, and supplies a hydrogen-containing gas that is generated to an anode of the fuel cell.

3. The fuel cell system of claim 1 or 2, wherein at least one of the pre-condensation humidifier and the post-condensation humidifier is a total heat exchanger that performs total heat exchange between the exhaust gas and the gas that is used for power generation in the fuel cell.

4. The fuel cell system of any one of claims 1 to 3,
wherein the exhaust gas is an off-oxidant gas that is discharged from a cathode of the fuel cell.

5. The fuel cell system of any one of claims 1 to 3, further comprising:
a combustor that combusts an off-fuel gas that is discharged from an anode of the fuel cell,
wherein the condenser condenses water in a combustion exhaust gas that is discharged from the combustor.

6. The fuel cell system of any one of claims 1 to 3, further comprising:
a combustor that combusts an off-fuel gas that is discharged from an anode of the fuel cell,
wherein the condenser condenses water in a mixed gas of an off-oxidant gas that is discharged from a cathode of the fuel cell, and a combustion exhaust gas that is discharged from the combustor.

7. The fuel cell system of claim 1 or 2, further comprising:
a combustor that combusts an off-fuel gas that is discharged from an anode of the fuel cell,
wherein the condenser includes a first condenser that condenses water in an off-oxidant gas that is discharged from a cathode of the fuel cell, and a second condenser that condenses water in a combustion exhaust gas that is discharged from the combustor, and
the post-codensation humidifier performs total heat exchange between a mixed gas of an off-oxidant gas that has passed through the first condenser and a combustion exhaust gas that has passed through the second condenser, and the gas that is used in the fuel cell.

8. The fuel cell system of any one of claims 5 to 7,
wherein the combustor is configured to combust at least one of the raw material, the hydrogen-containing gas, and the off-fuel 1 gas.

9. The fuel cell system of any one of claims 1 to 8,
wherein the gas which is used for power generation in the fuel cell is an oxidant gas that is supplied to a cathode of the fuel cell.

10. The fuel cell system of any one of claims 1 to 8,
wherein the gas which is used for power generation in the fuel cell is a hydrogen-containing gas that is supplied to an anode of the fuel cell.

## Patentansprüche

1. Brennstoffzellensystem, das umfasst:
eine Brennstoffzelle,
einen Vorkondensations-Befeuchter, der Wasser aus einem Abgas in einer die Brennstoffzelle enthaltenden Brennstoffzelleneinheit zu einem Gas, das für die Energieerzeugung in der Brennstoffzelle verwendet wird, führt,
einen Kondensator,
eine Wärme verwendende Einheit, die aus der Brennstoffzelle wiedergewonnene Wärme verwendet, und
einen Wärmeträger-Zirkulationspfad, der einen Wärmeträger durch die Wärme verwendende Einheit führt, wobei der Wärmeträger-Zirkulationspfad konfiguriert ist, um das zu dem Kondensator zugeführte Abgas abzukühlen, um Wärme wiederzugewinnen,
**dadurch gekennzeichnet, dass** der Kondensator Wasser in dem durch den Vorkondensations-Befeuchter hindurchgegangenen Abgas kondensiert,
einen Nachkondensation-Befeuchter, der Wasser aus dem durch den Kondensator hindurchgegangenen Abgas zu einem Gas, das zu dem Vorkondensation-Befeuchter geführt wird, bewegt.

2. Brennstoffzellensystem nach Anspruch 1, das weiterhin umfasst:
einen Wassertank, der durch den Kondensator kondensiertes Wasser sammelt, und
einen Reformer, der ein Rohmaterial und Wasser in dem Wassertank reformiert und ein erzeugtes wasserstoffhaltiges Gas zu einer Anode der Brennstoffzelle führt.

3. Brennstoffzellensystem nach Anspruch 1 oder 2, wobei der Vorkondensations-Befeuchter und/oder der Nachkondensations-Befeuchter ein Gesamtwärmetauscher ist, der einen Gesamtwärmetausch zwischen dem Abgas und dem für die Energieerzeugung in der Brennstoffzelle verwendeten Gas durchführt.

4. Brennstoffzellensystem nach einem der Ansprüche 1 bis 3, wobei das Abgas ein Oxidatorabgas ist, das von einer Kathode der Brennstoffzelle ausgeführt wird.

5. Brennstoffzellensystem nach einem der Ansprüche 1 bis 3, das weiterhin umfasst:
einen Verbrenner, der ein Brennstoffabgas, das von einer Anode der Brennstoffzelle ausgeführt wird, verbrennt,
wobei der Kondensator Wasser in einem Verbrennungsabgas, das von dem Verbrenner ausgeführt wird, kondensiert.

6. Brennstoffzellensystem nach einem der Ansprüche 1 bis 3, das weiterhin umfasst:
einen Verbrenner, der ein Brenstoffabgas, das von einer Anode der Brennstoffzelle ausgeführt wird, verbrennt,
wobei der Kondensator Wasser in einem Mischgas aus einem Oxidatorabgas, das von einer Kathode der Brennstoffzelle ausgeführt wird, und einem Verbrennungsabgas, das von dem Verbrenner ausgeführt wird, kondensiert.

7. Brennstoffzellensystem nach Anspruch 1 oder 2, das weiterhin umfasst:
einen Verbrenner, der ein Brennstoffabgas, das von einer Anode der Brennstoffzelle ausgeführt wird, verbrennt,
wobei der Kondensator einen ersten Kondensator, der Wasser in einem von einer Kathode der Brennstoffzelle ausgeführten Oxidatorabgas kondensiert, und einen zweiten Kondensator, der Wasser in einem von dem Verbrenner ausgeführten Verbrennungsabgas kondensiert, umfasst, und der Nachkondensations-Befeuchter einen Gesamtwärmetausch zwischen einem Mischgas, das aus einem durch den ersten Kondensator hindurchgegangenen Oxidatorabgas und einem durch den zweiten Kondensator hindurchgegangenen Verbrennungsabgas besteht, und dem in der Brennstoffzelle verwendeten Gas durchführt.

8. Brennstoffzellensystem nach einem der Ansprüche 5 bis 7, wobei der Verbrenner konfiguriert ist, um das Rohmaterial, das wasserstoffhaltige Gas und/oder das Brennstoffabgas zu verbrennen.

9. Brennstoffzellensystem nach einem der Ansprüche 1 bis 8, wobei das Gas, das für die Energieerzeugung in der Brennstoffzelle verwendet wird, ein Oxidatorgas ist, das zu einer Kathode der Brennstoffzelle zugeführt wird.

10. Brennstoffzellensystem nach einem der Ansprüche 1 bis 8, wobei das Gas, das für die Energieerzeugung in der Brennstoffzelle verwendet wird, ein wasserstoffhaltiges Gas ist, das zu einer Anode der Brennstoffzelle zugeführt wird.

## Revendications

1. Système pile à combustible, comprenant : une pile à combustible ; un humidificateur pré-condensation qui déplace l'eau d'un gaz d'échappement dans une unité pile à combustible qui comprend la pile à combustible vers un gaz qui est utilisé pour la production d'énergie dans la pile à combustible ; un dispositif réfrigérant ; une unité utilisant de la chaleur qui utilise la chaleur qui est récupérée de la pile à combustible ; et un trajet de circulation d'un fluide caloporteur qui fait circuler un fluide caloporteur à travers l'unité utilisant la chaleur, où le trajet de circulation du fluide caloporteur est configuré pour refroidir le gaz d'échappement qui est fourni au dispositif réfrigérant afin de récupérer la chaleur ; **caractérisé en ce que** le dispositif réfrigérant condense l'eau dans le gaz d'échappement qui est passé à travers l'humidificateur pré-condensation ; un humidificateur post-condensation qui déplace l'eau depuis le gaz d'échappement qui est passé à travers le dispositif réfrigérant vers un gaz qui est alimenté au niveau de l'humidificateur pré-condensation.

2. Système pile à combustible selon la revendication 1, comprenant en outre :
une cuve d'eau qui recueille l'eau qui est condensée par le dispositif réfrigérant ; et
un reformeur qui reforme une matière première et de l'eau dans la cuve d'eau, et fournit un gaz contenant de l'hydrogène qui est produit au niveau d'une anode de la pile à combustible.

3. Système pile à combustible selon la revendication 1 ou 2,
dans lequel au moins l'un de l'humidificateur pré-condensation et de l'humidificateur post-condensation est un échangeur thermique complet qui exécute l'échange thermique complet entre le gaz d'échappement et le gaz qui est utilisé pour la production d'énergie dans la pile à combustible.

4. Système pile à combustible selon l'une quelconque des revendications 1 à 3,
dans lequel le gaz d'échappement est un gaz d'échappement oxydant qui est évacué d'une cathode de la pile à combustible.

5. Système pile à combustible selon l'une quelconque des revendications 1 à 3, comprenant en outre :
un dispositif de combustion qui effectue la combustion d'un gaz d'échappement combustible qui est évacué d'une anode de la pile à combustible,
où le dispositif réfrigérant condense l'eau dans un gaz d'échappement de combustion qui est évacué du dispositif de combustion.

6. Système pile à combustible selon l'une quelconque des revendications 1 à 3, comprenant en outre :
un dispositif de combustion qui effectue la combustion d'un gaz d'échappement combustible qui est évacué d'une anode de la pile à combustible,
où le dispositif réfrigérant condense l'eau dans un gaz mixte d'un gaz d'échappement oxydant qui est évacué d'une cathode de la pile à combustible, et d'un gaz d'échappement de combustion qui est évacué du dispositif de combustion.

7. Système pile à combustible selon la revendication 1 ou 2, comprenant en outre :
un dispositif de combustion qui effectue la combustion d'un gaz d'échappement combustible qui est évacué d'une anode de la pile à combustible,
où le dispositif réfrigérant comprend un premier dispositif réfrigérant qui condense l'eau dans un gaz d'échappement oxydant qui est évacué d'une cathode de la pile à combustible, et
un second dispositif réfrigérant qui condense l'eau dans un gaz d'échappement de combustion qui est évacué du dispositif de combustion, et l'humidificateur post-condensation exécute l'échange thermique complet entre un gaz mixte d'un gaz d'échappement oxydant qui est passé à travers le premier dispositif réfrigérant et un gaz d'échappement de combustion qui est passé à travers le second dispositif réfrigérant, et le gaz qui est utilisé dans la pile à combustible.

8. Système pile à combustible selon l'une quelconque des revendications 5 à 7,
dans lequel le dispositif de combustion est configuré pour effectuer la combustion d'au moins l'un de la matière première, du gaz contenant de l'hydrogène, et du gaz d'échappement combustible.

9. Système pile à combustible selon l'une quelconque des revendications 1 à 8,
dans lequel le gaz qui est utilisé pour la production d'énergie dans la pile à combustible est un gaz oxydant qui est alimenté au niveau d'une cathode de la pile à combustible.

10. Système pile à combustible selon l'une quelconque des revendications 1 à 8,
dans lequel le gaz qui est utilisé pour la production d'énergie dans la pile à combustible est un gaz contenant de l'hydrogène qui est alimenté au niveau d'une anode de la pile à combustible.
